# EUROPÄISCHE PATENTANMELDUNG

(11) **EP 1 267 103 A2**
(43) Veröffentlichungstag der Anmeldung: **18.12.2002**
(21) Anmeldenummer: 02011717.2
(22) Anmeldetag: 25.05.2002
(51) Int. Cl.: F16H 61/46

(54) **Fahrantrieb für ein Kraftfahrzeug**

(30) Priorität: 15.06.2001 DE 10129989; 06.07.2001 DE 10134789
(71) Anmelder: Kässbohrer Geländefahrzeug AG, 88471 Laupheim (DE)
(72) Erfinder: Zambelli, Hans-Dieter, 5302 Henndorf a. Wallersee (AT)
(74) Vertreter: Patentanwälte Ruff, Wilhelm, Beier, Dauster & Partner

(57) **Zusammenfassung**

Ein Fahrantrieb mit einem Verbrennungsmotor (1) sowie mit einer Arbeitshydraulik, die eine durch den Verbrennungsmotor betätigte Pumpeinrichtung (2) aufweist, und mit einer elektronischen Steuereinheit (S), die die Drehzahl des Verbrennungsmotors und den Förderstrom der Pumpeinrichtung steuert, ist bekannt.

Erfindungsgemäß weist die Arbeitshydraulik einen mittels eines Steuergliedes (4,5;13) zuschaltbaren Hydrauliklastzweig (3,12) auf, und das Steuerglied ist durch die elektronische Steuereinheit aktivierbar, sobald eine erfasste Ist-Drehzahl des Verbrennungsmotors über einen Toleranzbereich einer eingestellten Soll-Drehzahl hinausgeht.

Einsatz für Kettenfahrzeuge auf Schneepisten.

## Beschreibung

Die Erfindung betrifft einen Fahrantrieb für ein Kraftfahrzeug, insbesondere ein Kettenfahrzeug, mit einem Verbrennungsmotor sowie mit einer Arbeitshydraulik, die eine durch den Verbrennungsmotor betätigte Pumpeinrichtung aufweist, und mit einer elektronischen Steuereinheit, die eine Drehzahl des Verbrennungsmotors und einen Förderstrom der Pumpeinrichtung steuert.

Ein Fahrantrieb für ein Kettenfahrzeug, das für den Einsatz auf Skipisten vorgesehen ist, ist allgemein bekannt. Ein solches Kettenfahrzeug wird durch Hydromotoren angetrieben, die für jede Fahrzeugseite von jeweils einer Pumpeinrichtung gespeist werden. Die beiden Pumpeinrichtungen werden über ein Verteilergetriebe von einem Verbrennungsmotor in Form eines Dieselmotors angetrieben. Je nach Hubraum des Dieselmotors kann dieser bei einer Bergabfahrt des Kettenfahrzeugs auf Schneepisten keine ausreichende Motorbremsleistung zur Verfügung stellen.

Um ein Beschleunigen bei der Bergabfahrt zu vermeiden, muss der Fahrer des Kettenfahrzeugs seine Fahrpedalstellung zurücknehmen.

Aufgabe der Erfindung ist es, einen Fahrantrieb der eingangs genannten Art zu schaffen, der über eine erhöhte Bremsleistung verfügt.

Diese Aufgabe wird dadurch gelöst, dass die Arbeitshydraulik einen mittels eines Steuergliedes zuschaltbaren Hydrauliklastzweig aufweist, und dass das Steuerglied durch die elektronische Steuereinheit aktivierbar ist, sobald eine erfasste Ist-Drehzahl des Verbrennungsmotors über einen Toleranzbereich einer eingestellten Soll-Drehzahl hinausgeht. Durch die erfindungsgemäße Lösung wird die Arbeitshydraulik als hydraulische Bremse eingesetzt, wodurch sich für den Verbrennungsmotor eine zusätzliche Bremsleistung ergibt. In der Arbeitshydraulik wird durch den Hydrauliklastzweig Energie verbraucht, die die zusätzliche Motorbremswirkung erzielt. Als Hydrauliklastzweig kann vorzugsweise ein durch das Steuerglied beaufschlagter Hydraulikkreis vorgesehen sein, der eine Rücklaufleitung für das Hydrauliköl in einen Hydrauliktank aufweist. Die jeweilige Ist-Drehzahl des Verbrennungsmotors wird erfasst und mit der durch ein Fahrpedal jeweils eingestellten Soll-Drehzahl verglichen. Die Soll-Drehzahl, die jeweils eingestellt ist, weist einen Toleranzbereich auf, innerhalb dessen die sich tatsächlich jeweils einstellende Ist-Drehzahl verbleibt, ohne dass ein elektronischer Eingriff erfolgt. Sobald die Ist-Drehzahl jedoch nach oben über die jeweils eingestellte Soll-Drehzahl über den Toleranzbereich hinausgeht, erfolgt die Aktivierung des Steuergliedes für den Hydrauliklastzweig, wodurch die hydraulische Bremse automatisch zugeschaltet wird. Vorteilhaft liegt der Toleranzbereich bei ca. 300 Umdrehungen pro Minute für den Einsatz des erfindungsgemäßen Fahrantriebs bei einem Kettenfahrzeug für Schneepisten und bei einem Dieselmotor mit entsprechend geringem Hubraum. Durch den Einsatz der Arbeitshydraulik für die zusätzliche Erzielung einer Bremsleistung sind entsprechende Maßnahmen am Verbrennungsmotor entbehrlich. Das Vorsehen eines entsprechenden Hydrauliklastzweiges mit ansteuerbarem Steuerglied ist mit einfachen Mitteln realisierbar und kann insbesondere auch durch eine Nachrüstung einer bereits bestehenden Arbeitshydraulik erfolgen.

In Ausgestaltung der Erfindung weist der Hydrauliklastzweig ein Druckbegrenzungsglied auf, dessen Schaltschwelle unter einem maximalen Arbeitsdruck der Arbeitshydraulik liegt. Dadurch ist gewährleistet, dass die Pumpeneinrichtung maximal aussteuert, da sie versucht, den Arbeitsdruck der Arbeitshydraulik zu erreichen. Hierdurch wird die gewünschte Bremsleistung erzielt.

In weiterer Ausgestaltung der Erfindung ist der Hydrauliklastzweig durch einen in der Arbeitshydraulik vorhandenen Überlastkreis gebildet, und ein Steuermittel des Überlastkreises ist zusätzlich als Steuerglied für den Hydrauliklastzweig ausgelegt. Dadurch kann der Überlastkreis eine Doppelfunktion übernehmen, so dass kein separater Hydrauliklastzweig benötigt wird. Je nach Stellung des Steuermittels wird entweder die eine oder die andere Lastfunktion eingestellt. Bei der ersten Lastfunktion ist eine Sekundärdruckabsicherung vorgesehen, wobei eine Druckbegrenzung oberhalb des Arbeitsdruckes der Arbeitshydraulik vorgesehen ist. Die zweite Lastfunktion entspricht vorzugsweise dem oben beschriebenen Hydrauliklastzweig.

In weiterer Ausgestaltung der Erfindung weist das Steuermittel des Überlastkreises ein Druckbegrenzungsventil auf, dessen Schaltschwelle über dem maximalen Arbeitsdruck der Arbeitshydraulik liegt, und die Schaltschwelle des Druckbegrenzungsventils ist mittels der elektronischen Steuereinheit zwischen der oberen Schaltschwelle und einer unteren Schaltschwelle für den Hydrauliklastzweig verstellbar. Bei einem in einem Kettenfahrzeug für Skipisten eingesetzten Fahrantrieb kann die Arbeitshydraulik vorzugsweise mit einem Ölvolumen von 120 Litern und einem maximalen Arbeitsdruck von 200 bar betrieben werden. Die zusätzliche Bremsleistung wird vorzugsweise durch eine Druckabsicherung bei 170 bar mit einem Wert von ca. 35 kW erzielt. Die Sekundärdruckabsicherung erfolgt vorzugsweise durch eine Druckbegrenzung auf 230 bar.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt ein Blockschaltbild einer Arbeitshydraulik einer Ausführungsform eines erfindungsgemäßen Fahrantriebs mit und
- Fig. 2: in einem weiteren Blockschaltbild eine weitere Ausführungsform

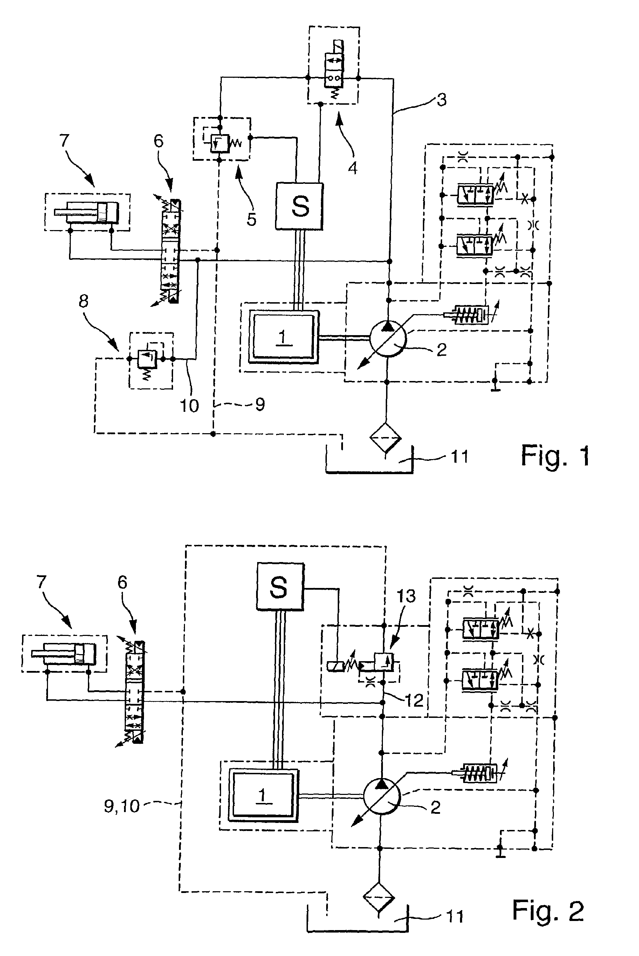

Sowohl ein Fahrantrieb nach Fig. 1 als auch ein Fahrantrieb nach Fig. 2 sind für den Einsatz in einem Kettenfahrzeug vorgesehen, das bevorzugt auf Schneepisten eingesetzt wird. Ein solches Kettenfahrzeug weist einen als Dieselmotor 1 gestalteten Verbrennungsmotor auf, der für jede Fahrzeugseite, d.h. für jedes Kettenfahrwerk, jeweils eine Pumpeinrichtung 2 antreibt. Hierzu ist zwischen dem Dieselmotor 1 und der jeweiligen Pumpeinrichtung 2 ein nicht dargestelltes Verteilergetriebe vorgesehen. Jede Pumpeinrichtung 2 speist einen oder mehrere Hydromotoren, die Antriebsrädern des jeweiligen Kettenlaufwerks zugeordnet sind. Ein derartiger Fahrantrieb ist grundsätzlich bekannt, so dass an dieser Stelle nicht näher darauf eingegangen werden muss. Bei den dargestellten Ausführungsbeispielen nach den Fig. 1 und 2 ist jeweils lediglich eine einzelne Pumpeinrichtung 2 dargestellt, die jeweils eine Fahrzeugseite speist. Die Pumpeinrichtung 2 ist Teil einer Arbeitshydraulik, die neben dem Antrieb des jeweiligen Kettenlaufwerks noch weitere Arbeitsfunktionen, insbesondere im Bereich von front- und heckseitigen Anbaugeräten aufweist. Auch diese sind grundsätzlich bekannt, so dass hierauf nicht näher eingegangen werden muss.

Die Ansteuerung des Dieselmotors 1 und der Arbeitshydraulik erfolgt über eine elektronische Steuereinheit S, die in den Fig. 1 und 2 angedeutet ist. Die elektronische Steuereinheit S ist mit einem Fahrpedal verbunden, das von dem Fahrer des Kettenfahrzeugs bedient wird. Die elektronische Steuereinheit erfasst die jeweilige Stellung des Fahrpedals und ordnet dieser aus einem Datenkennfeld eine entsprechende Soll-Drehzahl für den Dieselmotor 1 zu. Die Ist-Drehzahl des Dieselmotors wird laufend erfasst.

Beim Fahren auf ebener Strecke entspricht die Stellung des Fahrpedals und damit die gewünschte Soll-Drehzahl auch der tatsächlich am Dieselmotor erzielten Ist-Drehzahl. Bei einer Bergabfahrt des Kettenfahrzeugs muss das Bremsmoment des Dieselmotors die entsprechende Bremsleistung gegenüber dem zusätzlich nach vorne ziehenden Schwerkraftteil des Kettenfahrzeugs aufbringen. Falls der Hubraum des Dieselmotors nicht ausreicht, um ein entsprechendes Gegenmoment aufzubringen, erhöht sich die Drehzahl des Dieselmotors, obwohl die Fahrpedalstellung nicht verändert wird. Eine Reduzierung der Drehzahl müsste dann durch den Fahrer vorgenommen werden, indem dieser die Fahrpedalstellung zurücknimmt.

Um auch bei Dieselmotoren oder anderen Verbrennungsmotoren mit nicht ausreichendem Hubraum bei Bergabfahrt eine erhöhte Bremsleistung zu erzielen, ist die Arbeitshydraulik gemäß Fig. 1 mit einem zusätzlichen Hydrauliklastzweig 3, 4, 5 versehen. Dieser weist ein Druckbegrenzungsventil 5 und ein Magnetventil 4 auf, wobei das Magnetventil 4 je nach Stellung eine Rücklaufleitung 9 zu einem Tank 11 der Arbeitshydraulik freigibt. Die Pumpeinrichtung 2 ist beim dargestellten Ausführungsbeispiel auf einen maximalen Arbeitsdruck von 200 bar eingestellt. Das Druckbegrenzungsventil bietet eine Druckabsicherung bei 170 bar. Zusätzlich ist als Überlastkreis noch eine Sekundärdruckbegrenzung 8 auf 230 bar vorgesehen. Auch diese führt über eine Zweigleitung 10 bei entsprechender Schaltung in den Tank 11. Lediglich vereinfacht dargestellt ist beispielhaft für die Arbeitshydraulik ein Stellglied 6, das die Betätigung eines Arbeitszylinders für einen frontseitigen Räumschild darstellt. Beim Ausführungsbeispiel nach Fig. 1 ist der Hydrauliklastzweig als separater Kreis vorgesehen.

Die Steuereinheit S überwacht den Soll-Ist-Wertvergleich der Drehzahl des Dieselmotors 1. Sobald die Ist-Drehzahl des Dieselmotors 1 um mehr als 300 Umdrehungen pro Minute über dem durch das Fahrpedal eingestellten Soll-Drehzahlwert liegt, was dem maximalen Toleranzbereich der Soll-Drehzahl entspricht, wird der Hydrauliklastzweig durch entsprechende Betätigung des Magnetventils 4 und des Druckbegrenzungsventils 5 freigegeben, wodurch der Dieselmotor 1 über diese zusätzliche Last der Arbeitshydraulik belastet wird. Durch die Druckbegrenzung mittels des Druckbegrenzungsventils 6 auf einen Wert unterhalb des maximalen Arbeitsdruckes schwenkt die Pumpeinrichtung 2 auf ihren maximalen Schwenkwinkel aus, da die Steuereinheit versucht, die Pumpeinrichtung 2 auf den eingestellten Arbeitsdruck von 200 bar zu bringen. Da die Druckbegrenzung auf 170 bar vorhanden ist, ergibt sich ein erhöhtes Bremsmoment, das in der zusätzlichen Bremsleistung von ca. 35 kW resultiert. Die Sekundärdruckabsicherung 8 arbeitet beim vorliegenden Ausführungsbeispiel mit einer Druckbegrenzung von 230 bar.

In Fig. 2 sind der Überlastkreis mit einer Sekundärdruckabsicherung von 230 bar und der Hydrauliklastzweig mit einer Druckbegrenzung von 170 bar in einem gemeinsamen Hydraulikkreis integriert. Hierzu ist einer Hydraulikleitung 12 ein bestrombares Steuerglied in Form eines zweistufigen Druckbegrenzungsventils 13 zugeordnet, das von der Steuerleitung S angesteuert ist. Das Druckbegrenzungsventil 13 weist im stromlosen Zustand eine Schaltschwelle von 230 bar und im bestromten Zustand eine Schaltschwelle von 170 bar auf. Aufgrund der Überwachung der Ist-Drehzahl des Dieselmotors 1 und dem Vergleich mit der jeweils durch das Fahrpedal eingestellten Soll-Drehzahl kann die Steuereinheit S nun je nach Bedarf das Druckbegrenzungsventil 13 stromlos halten oder bestromen. Bei der zuvor beschriebenen Abweichung zwischen Soll- und Ist-Drehzahl von mehr als 300 Umdrehungen pro Minute, die beim vorliegenden Ausführungsbeispiel dem Toleranzbereich der Soll-Drehzahl entspricht, wird der Hydrauliklastzweig zugeschaltet, wodurch die entsprechende zusätzliche Bremsleistung analog dem oben beschriebenen Ausführungsbeispiel erzielbar ist.

## Patentansprüche

1. Fahrantrieb für ein Kraftfahrzeug, insbesondere ein Kettenfahrzeug mit einem Verbrennungsmotor sowie mit einer Arbeitshydraulik, die eine durch den Verbrennungsmotor betätigte Pumpeinrichtung aufweist, und mit einer elektronischen Steuereinheit, die eine Drehzahl des Verbrennungsmotors und einen Förderstrom der Pumpeinrichtung steuert, **dadurch gekennzeichnet, dass** die Arbeitshydraulik einen mittels eines Steuergliedes (4, 5; 13) zuschaltbaren Hydrauliklastzweig (3, 12) aufweist, und dass das Steuerglied (4, 5, 13) durch die elektronische Steuereinheit (S) aktivierbar ist, sobald eine erfasste Ist-Drehzahl des Verbrennungsmotors (1) über einen Toleranzbereich einer eingestellten Soll-Drehzahl hinausgeht.

2. Fahrantrieb nach Anspruch 1, **dadurch gekennzeichnet, dass** der Hydrauliklastzweig ein Druckbegrenzungsglied (5, 13) aufweist, dessen Schaltschwelle unter einem maximalen Arbeitsdruck der Arbeitshydraulik liegt.

3. Fahrantrieb nach Anspruch 1 oder 2, **dadurch gekennzeichnet, dass** der Hydrauliklastzweig als separate Einheit mit der Arbeitshydraulik verbindbar ist.

4. Fahrantrieb nach Anspruch 1 oder 2, **dadurch gekennzeichnet, dass** der Hydrauliklastzweig durch einen in der Arbeitshydraulik vorhandenen Überlastkreis gebildet ist, und dass ein Steuermittel (13) des Überlastkreises zusätzlich als Steuerglied für den Hydrauliklastzweig ausgelegt ist.

5. Fahrantrieb nach Anspruch 4, **dadurch gekennzeichnet, dass** das Steuermittel (13) des Überlastkreises ein Druckbegrenzungsventil aufweist, dessen Schaltschwelle über dem maximalen Arbeitsdruck der Arbeitshydraulik liegt, und dass die Schaltschwelle des Druckbegrenzungsventils (13) mittels der elektronischen Steuereinheit (S) zwischen der oberen Schaltschwelle und einer unteren Schaltschwelle für den Hydrauliklastzweig verstellbar ist.
